# EUROPÄISCHE PATENTSCHRIFT

(11) **EP 2 571 698 B1**
(45) Veröffentlichungstag und Bekanntmachung des Hinweises auf die Patenterteilung: **24.06.2015**
(21) Anmeldenummer: 11714491.5
(22) Anmeldetag: 08.04.2011
(51) Int. Cl.: B41J 3/407

(54) **VORRICHTUNG SOWIE VERFAHREN ZUM BEDRUCKEN, INSBESONDERE ZUM MEHRFARBIGEN BEDRUCKEN VON BEHÄLTERN**
DEVICE AND METHOD FOR PRINTING, IN PARTICULAR FOR PRINTING CONTAINERS IN SEVERAL COLORS
DISPOSITIF ET PROCÉDÉ D'IMPRESSION, EN PARTICULIER D'IMPRESSION POLYCHROME DE RÉCIPIENTS

(30) Priorität: 19.05.2010 DE 102010020958
(43) Veröffentlichungstag der Anmeldung: 27.03.2013
(73) Patentinhaber: KHS GmbH, 44143 Dortmund (DE)
(72) Erfinder: BUCHKREMER, Wolfgang, 41515 Grevenbroich (DE)
(86) Internationale Anmeldenummer: PCT/EP2011/001754
(87) Internationale Veröffentlichungsnummer: WO 2011/144278

(56) Entgegenhaltungen:
- EP-A1- 0 707 959
- WO-A1-2009/018892

## Beschreibung

Die Erfindung bezieht sich auf eine Vorrichtung gemäß Oberbegriff Patentanspruch 1 sowie auf ein Verfahren gemäß Oberbegriff Patentanspruch 11.

Behälter im Sinne der Erfindung sind insbesondere als Behälter ausgebildete Packmittel für Füllgut unterschiedlicher Art und dabei speziell Flaschen oder flaschenartige Behälter oder Dosen oder dosenartige Behälter. Druckfarben oder -tinten im Sinne der Erfindung sind solche Farben oder Tinten, insbesondere in flüssiger oder leicht viskoser Form, die mit Druckköpfen verarbeitet werden können, welche bevorzugt digital ansteuerbar sind und nach dem Tintenstrahldruckkopfprinzip arbeiten.

Druckköpfe in diesem Sinne sind insbesondere Druckköpfe, die eine Vielzahl von Druckdüsen oder -öffnungen zum Ausbringen der Druckfarbe oder -tinte beispielsweise in wenigstens einer Reihe aufweisen und die individuell zum Ausbringen der Druckfarbe oder -tinte elektrisch ansteuerbar sind und hierfür an der jeweiligen Düsenöffnung ein Druck erzeugendes Elerrtent, beispielsweise in Form einer Elektrode oder eines Piezzo-Elementes aufweisen.

Vorrichtungen der gattungsbildenden Art zum Bedrucken von Behältern unter Verwendung von nach dem Tintenstrahldruckprinzip arbeitenden Druckköpfen und unter Relativbewegung zwischen den Druckköpfen und dem jeweiligen Behälter während des Druckens sind bekannt (DE 10 2007 036 752). Eine bekannte Vorrichtung dieser Art besitzt zwei Transportsysteme in Form von zwei konzentrisch zueinander um eine vertikale Maschinenachse angeordneten und um diese Maschinenachse umlaufend antreibbaren Tragringen. Am äußeren Tragring sind in gleichmäßigen und fest vorgegebenen Winkelabständen um die vertikale Maschinenachse verteilt Behälteraufnahmen vorgesehen. Am inneren Tragring sind ebenfalls in fest vorgegebenen Winkelabständen Druckkopfeinheiten mit jeweils einem mehrere Druckköpfe aufweisende Druckwerk vorgesehen. Das Aufbringen der mehrfarbigen Druckbilder auf die an jeweils einer Behälteraufnahme angeordneten Behälter erfolgt auf einer Druckstrecke, die dem Winkelbereich der Drehbewegung der Tragringe zwischen einem Behältereinlauf und einem Behälterauslauf entspricht, und zwar In zeitlich aufelnander folgenden Druckschritten, wobei in jedem Druckschritt ein Farbsatz des jeweiligen Druckbildes erzeugt wird. Während des jeweiligen Druckvorgangs werden die Tragringe und damit auch die Druckkopfeinheiten und Behälter synchron, d.h. gleichsinnig und mit derselben Winkelgeschwindigkeit bewegt. Der innere Tragrring ist zusätzlich für eine pendelnde Drehbewegung ausgebildet, und zwar in der Form, dass nach dem Aufbringen eines Druckbildes oder eines Farbsatzes auf einen Behälter mit derselben Druckkopfeinheit anschließend ein weiterer Behälter bedruckt wird.

Die Druckschrift WO 2009/018892 A1 offenbart eine Vorrichtung zum Bedrucken von Behältern, bei der mittels eines Rotors bzw. einem Transportsystem eine Vielzahl von in gleichmäßigen Abständen wangeordneten Druckstationen bestehend aus einem Behälterträger, einem Druckwerk und einer Einrichtung zum Trocknen der Druckfarbe bewegt werden. Dabei sind die mit dem Transportsyetem mitbewegten Druckwerke für einen Wechsel der Druckköpfe relativ zum Transportsystem bewegbar.

Ferner offenbart die Druckschrift EP 0 707 959 A1 eine Vorrichtung zur Bedruckung von Flaschen mittels eines Siebdruckverfahrens. Die Siebdruckmaschine weist Druckstationen auf, die beanstandet zueinander an einer Längsseite einer oval ausgebildeten Transportbahn zur Bewegung der zu bedruckenden Flaschen vorgesehen sind. Die zu bedruckenden Flaschen werden unterhalb der Siebdruckstationen schrittweise durch die einzelnen Druckstationen hindurchgeführt. Die an den Druckstationen vorgesehenen Siebdruckschablonen werden durch die Betätigung eines Motors hin- und herbewegt, um dadurch die Bedruckung der Flasche zu bewirken.

Aufgabe der Erfindung ist es, eine Vorrichtung aufzuzeigen, mit der bei verbesserter Leistung und bei reduziertem konstruktivem Aufwand ein Bedrucken von Behältern mit wenigstens einem hochqualitativen und jeweils von wenigstens einem Druckbild gebildeten Aufdruck möglich ist. Zur Lösung dieser Aufgabe ist eine Vorrichtung entsprechend dem Patentanspruch 1 ausgebildet. Ein Verfahren zum Bedrucken von Behältern ist Gegenstand des Patentanspruchs 11.

Eine Besonderheit der erfindungsgemäßen Vorrichtung besteht darin, dass wenigstens ein Transportsystem so ausgebildet ist, dass auf der Druckstrecke die Behälteraufnahmen und die diesen beim Bedrucken jeweils zugeordneten Druckkopfeinheiten synchron, d.h. in gleicher Richtung und mit derselben Geschwindigkeit bewegt werden, außerhalb der Transportstrecke die Druckkopfeinhelten oder Behälteraufnahmen dieses Transportsystems aber mit geänderter Geschwindigkeit, beispielsweise mit erhöhter Geschwindigkeit und/oder zwar gesteuert, aber unabhängig von den übrigen Druckkopfeinheiten oder Behälteraufnahmen bewegt werden können. Das entsprechende Transportsystem ist hierfür vorzugsweise mit einem Linearantrieb ausgebildet, der ein Bewegen der Druckkopfeinheiten oder Behälteraufnahmen zumindest auf unterschiedlichen Abschnitten der Bewegungsbahn des Transportsystems mit geänderter Geschwindigkeit ermöglicht. Derartige Linearantriebe sind beispielsweise nach dem Linearmotorprinzip arbeitenden elektromotorische Antriebe, die an einer eine Führung für bewegliche Schlitten bildenden ortsfesten Armatur in Bewegungs- oder Transportrichtung der Schlitten aufeinander folgend eine Vielzahl von Magnetpolen mit zugehörigen individuell ansteuerbaren Wicklungen sowie an den Schlitten Permanentmagnete aufweisen. Ein derartiger Linearantrieb wird unter der Marke "PackTrak" von der Siemens AG auf dem Markt angeboten. Linearantriebe Im Sinne der Erfindung sind aber u.a. auch Antriebe, bei denen die in einer Führung geführten Schlitten durch mechanische Antriebselemente, beispielsweise durch Transportbänder oder -riemen in Transportrichtung bewegt werden, wobei die Geschwindigkeit der Antriebselemente auf unterschiedlichen Abschnitten der Bewegungsbahn der Schlitten individuell steuerbar Ist.

Der Erfindung liegt die Erkenntnis zugrunde, dass für eine möglichst hohe Leistung der Vorrichtung (Anzahl der bedruckten Behälter je Zeiteinheit) unter Berücksichtigung der für das Fertigstellen des jeweiligen Druckbildes benötigten Zeit, die u.a. durch die Geschwindigkeit der Druckköpfe sowie durch die Trockenzeit der Druckfarben bestimmt ist, eine möglichst dichte Folge der Behälteraufnahmen und der diesen zugeordneten Druckkopfeinheiten auf der Druckstrecke anzustreben ist, und zwar unter entsprechender Anpassung der Fördergeschwindigkeit und der Länge der Druckstrecke, dass aber eine deutliche Reduzierung der Anzahl der benötigten Druckkopfeinheiten und Behälteraufnahmen und dadurch u.a. auch eine deutliche Reduzierung des konstruktiven Aufwandes durch beschleunigtes Rückführen dieser Elemente von dem Druckstreckenende bzw. -auslauf an den Druckstreckeneinlass möglich ist.

Durch die Verwendung des flexiblen, d.h. für eine unabhängige Bewegung der Druckkopfeinheiten oder Behälteraufnahmen ausgebildeten Transportsystems besteht weiterhin die Möglichkeit, Wartepositionen für die Druckkopfeinheiten oder Behälteraufnahmen zu realisieren, beispielsweise auch Warteposition zum Nachtanken der Druckkopfeinheiten mit Druckfarbe oder -tinte, zum Reinigen der Druckkopfeinheiten bzw. der dortigen Druckköpfe usw.

Die erfindungsgemäße Vorrichtung gestattet eine exakte Positionierung der Druckwerke bzw. Druckköpfe im Bezug auf den jeweiligen Behälter. Insbesondere ist es mit der erfindungsgemäßen Vorrichtung auch möglich, dass jeweilige Druckbild vollständig mit dem der Behälteraufnahme zugeordneten Druckkopfeinheit zu erzeugen, d.h. ein Wechsel von Druckkopfeinheiten beim Erstellen eines Druckbildes ist nicht erforderlich.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an Ausführungsbeispiele näher erläutert. Es zeigen:
- Fig. 1: in schematischer Darstellung und im Wesentlichen in Draufsicht eine Vorrichtung zum Bedrucken von Behältern mit jeweils wenigstens einem Druckbild in einem Mehrfarbendruckbild;
- Fig. 2: in schematischer Darstellung zwei Behälteraufnahmen des zweiten Transportsystems für die Behälter;
- Fig. 3: in vereinfachter Darstellung einen Vertikalschnitt durch die Behandlungs- oder Druckstrecke der Vorrichtung der Figur 1;
- Fig. 4: eine Draufsicht auf die Anordnung der Figur 3;
- Fig. 5: und 6 Darstellungen wie Figur 4 bei zwei weiteren Ausführungsformen der Druckkopfeinheit.

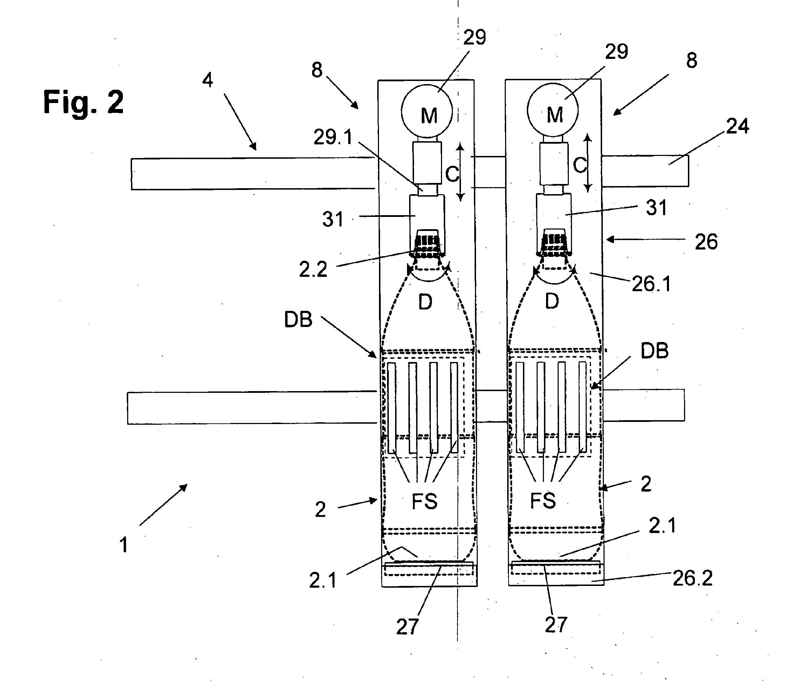

Die in den Figuren allgemein mit 1 bezeichnete Vorrichtung dient zum Bedrucken von Behältern, die beispielhaft in Form von Flaschen dargestellt sind, mit jeweils wenigstens einem Druckbild DB in Form eines Mehrfarbendrucks, der aus mehreren, sich zu dem Druckbild ergänzenden Farbsätzen FS unterschiedlicher Farbgebung besteht, die in der Figur 2 aschematisch in Form von mehreren Streifen dargestellt sind, tatsächlich aber mehrere überlagerte Farbsätze FS sind, beispielsweise für die Farben Schwarz, Gelb, Magenta und Zyan.

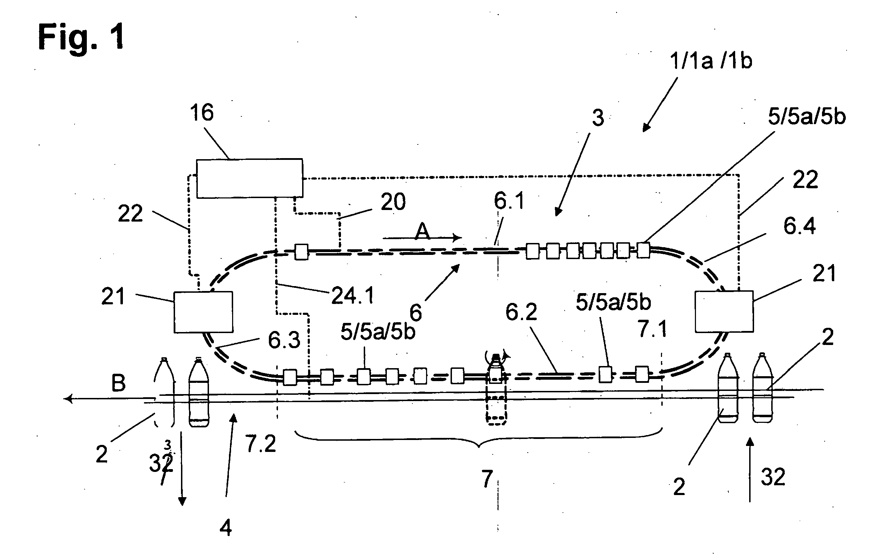

Die Vorrichtung 1 besitzt bei der dargestellten Ausführungsform zwei Transportsysteme, nämlich ein erstes Transportsystem 3 und ein zweites Transportsystem 4. Das erste Transportsystem 3 umfasst u.a. eine Vielzahl von Druckkopfeinheiten 5, die individuell und unabhängig voneinander, aber in der nachstehend noch näher beschriebenen Weise gesteuert in einer Bewegungs- oder Transportrichtung A auf einer in sich geschlossenen und bei der dargestellten Ausführungsform im Wesentlichen ovalen Bewegungsbahn 6 bewegbar sind, und zwar u.a. auch entlang einer in den Figuren 1 mit 7 bezeichneten und bei der dargestellten Ausführungsform geradlinig ausgebildeten Behandlungs- oder Druckstrecke, die sich zwischen einem Druckstreckeneinlauf 7.1 und einem Druckstreckenauslauf 7.2 erstreckt.

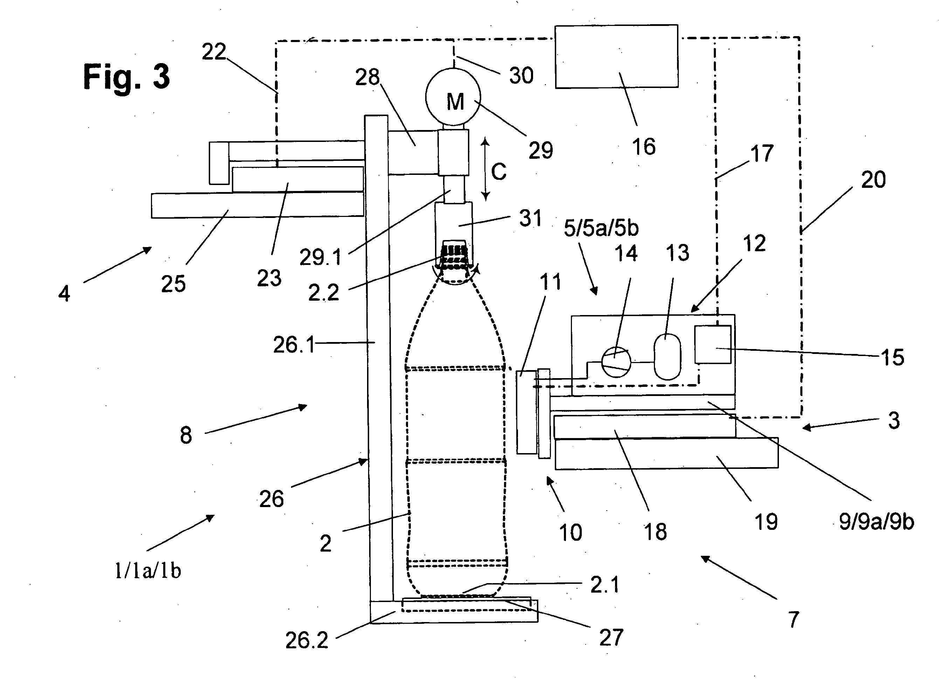

Das zweite Transportsystem 4 dient im Wesentlichen zum Transportieren der in Behälteraufnahmen 8 (Figur 2 und 3) angeordneten und mit ihren Behälterachsen in vertikaler Richtung orientierten Behälter 2 durch die Druckstrecke 7 in der Transportrichtung B sowie in der nachstehend auch noch näher beschriebenen Weise zum gesteuerten Drehen oder Schwenken der Behälter 2 um ihre vertikale Behälterachse während des Bedruckens.

In der Figur 1 ist das Transportsystem 4 der einfacheren Darstellung wegen nur auf einer Teillänge im Bereich der Druckstrecke 7 gezeigt, tatsächlich ist das Transportsystem 4 aber so ausgeführt, dass sich die Aufnahmen 8 ebenfalls auf einer in sich geschlossenen Bewegungsbahn 9 bewegen, und zwar bei einer dargestellten Ausführungsform ebenfalls unabhängig voneinander, aber in der nachstehend noch näher beschriebenen Weise gesteuert.

Die Druckkopfeinheiten 5 umfassen jeweils einen Schlitten 9, der entlang der Bewegungsbahn 6 an einer nicht dargestellten Schlittenführung beweglich geführt und auf dem das jeweilige Druckwerk 10 angeordnet ist, welches bei der dargestellten Ausführungsform vier in horizontaler Richtung aufeinander folgende Druckköpfe 11 für unterschiedliche Farben, nämlich beispielsweise für Gelb, Magenta, Zyan und Schwarz zur Erzeugung der unterschiedlichen Farbsätze FS eines Mehrfarbenaufdruck aufweist.

Die Druckköpfe 11 sind digital steuerbare Druckköpfe nach Art von Tintenstrahldruckköpfen, beispielsweise Druckköpfe, die unter der Bezeichnung "XAAR" oder "XAAR500" auf dem Markt erhältlich sind. Im Wesentlichen bestehen die Druckköpfe 11 jeweils aus einem Gehäuse mit einer Vielzahl von individuell ansteuerbaren Druckdüsen oder Düsenöffnungen zum Ausbringen der Druckfarbe oder Drucktinte in der dem jeweiligen Druckbild DB und Farbauszug FS entsprechenden Verteilung und Menge auf den zu bedruckenden Untergrund, d.h. auf die zu bedruckende, beispielsweise kreiszylinderförmige Außen- oder Mantelfläche der Behälter 2. Die mit ihren Achsen horizontal oder im Wesentlichen horizontal angeordneten Druckdüsen sind an jedem Druckkopf 11 in wenigstens einer vertikalen Reihe angeordnet. Das Ausbringen der Druckfarbe oder Drucktinte wird durch eine entsprechende Ansteuerung von Elektroden oder von Piezzo-Elementen oder Aktoren in den Druckköpfen 11 erreicht.

Auf jedem Schlitten 9 ist weiterhin eine Versorgungseinheit 12 vorgesehen, die einerseits Mittel zum Nachfüllen der Druckköpfe 11 mit der jeweiligen Druckfarbe oder -tinte aufweisen, beispielsweise in Form eines eigenen Vorrats- oder Hilfstanks 13 für jede Druckfarbe oder -tinte mit zugehöriger Pumpe 14 zur Förderung der Druckfarbe oder -tinte in den zugehörigen Druckkopf 11. Die Versorgungs- und Steuereinheit 12 umfasst weiterhin auch eine Elektronik 15, die u.a. zur Steuerung der Druckköpfe 11 bzw. zur Steuerung des Ausbringens der Druckfarbe oder -tinte in der dem jeweiligen Druckbild DB oder Farbauszug FS entsprechenden Verteilung und Menge auf die zu bedruckende Behälter 2 dient, in der aber bevorzugt auch das jeweilige Druckbild DB bzw. die diesem Druckbild entsprechende Druckvorlage in einem Speicher elektronisch abgelegt ist. Das Einlesen und/oder Ändern der in dem Speicher der Elektronik 15 der Druckkopfeinheiten 5 elektronisch abgelegten Druckvorlagen erfolgt über eine übergeordnete, zentrale Steuereinheit 16, ggs. auch so, dass die Druckvorlagen der Druckkopfeinheiten 5 unterschiedlich sind, sofern dies für ein unterschiedliches Bedrucken der Behälter 2 gewünscht wird. Für die Übertragung und/oder Änderung der Druckvorlagen sowie auch für weitere Steuerungsprozesse ist jede Druckkopfeinheit 5 bzw. deren Elektronik 15 über eine einen bidirektionalen Transfer von Daten und/oder Befehlen ermöglichende Datenübertragungsstrecke 17 mit der Steuereinheit 16 verbunden.

Für die individuelle aber dennoch gesteuerte Bewegung der Druckkopfeinheiten 5 weist das Transportsystem 3 einen sich entlang der Bewegungsbahn 6 erstreckenden Linearantrieb 18 auf, der über Träger 19 an einem Maschinengestell gehalten ist sowie die Schlittenführung bildet und in der dem Fachmann bekannten Weise aus einer Vielzahl von entlang der Bewegungsbahn aufeinander folgenden Magnetpolen mit zugehörigen elektrischen Wicklungen sowie aus diesen Magnetpolen zugeordneten Permanentmagneten an den Schlitten 9 der Druckkopfeinheiten 5 besteht.

Bei der dargestellten Ausführungsform ist die Bewegungsbahn 6 so ausgeführt, dass sie zwei längere geradlinige und parallel sowie im Abstand voneinander verlaufende Abschnitte 6.1 und 6.2 sowie zwei jeweils kurvenförmige Abschnitte 6.3 und 6.4 aufweist, die die Abschnitte 6.1 und 6.2 miteinander verbinden. Mit der Steuereinheit 16 ist der Linearantrieb 18 derart steuerbar, dass sich für die einzelnen Druckkopfeinheiten 5 zumindest an unterschiedlichen Abschnitten oder Teilabschnitten der Bewegungsbahn 6 sehr unterschiedliche Bewegungen ergeben. So befindet sich z.B. eine Gruppe von Druckkopfeinheiten 5 auf dem Abschnitt 6.1 in einer Warteposition, aus der die bezogen auf die Transportrichtung A erste Druckkopfeinheit 5 über den Abschnitt 6.4 beschleunigt an den Druckstreckeneinlauf 7.1 bewegt wird, um sich dann beispielsweise verlangsamt, aber synchron mit der Bewegung einer Behälteraufnahme 8 in der nachstehend noch näher beschriebenen Weise zum Bedrucken eines Behälters 2 entlang der Druckstrecke 7 zu bewegen. Nach Erreichen des Druckstreckenauslaufs 7.2 wird die jeweilige Druckkopfeinheit 5 beispielsweise wiederum beschleunigt über den Abschnitt 6.3 an den Abschnitt 6.1 bzw. an die dortige Wartestellung zurückbewegt. Die Steuerung des Linearantriebs 18 und damit der Bewegung der Druckkopfeinheiten 5 erfolgt durch die Steuereinheit 16 über eine einen bidirektionalen Transfer von Daten und/oder Befehlen ermöglichende Datenübertragungsstrecke 20.

An der Bewegungsbahn 6 sind Tankstationen 21 vorgesehen, und zwar bei der dargestellten Ausführungsform an den Abschnitten 6.3 und 6.4. Durch die Steuereinheit 16 ist der Linearantrieb 18 weiterhin so steuerbar, dass jede Druckkopfeinheit 5 beim Passieren einer Tankstation 21 zum selbsttätigen Nachtanken der Druckfarben oder -tinten angehalten wird. Dieses Nachtanken kann jeweils automatisch oder aber auf Anforderung erfolgten, und zwar gesteuert durch ein dem jeweiligen Füllstand des Hilfstanks 13 der Druckkopfeinheiten 5 entsprechendes Signal. Auch die Tankstationen 21 werden durch die Steuereinheit 16 gesteuert, und zwar über eine einen bidirektionalen Transfer von Daten und/oder Befehlen ermöglichende Datenübertragungsstrecke 22. Die Tankstationen 21 sind beispielsweise identisch ausgeführt und ermöglichen jeweils ein Nachtanken sämtlicher Druckfarben oder -tinten, oder aber die Tankstationen 21 sind jeweils zum Nachtanken von nur zwei Druckfarben ausgeführt.

Die Behälteraufnahmen 8 umfassen u.a. einen Tragschlitten 23, der entlang der Transportstrecke 4 in Transportrichtung B bewegbar ist, und zwar geführt durch eine nicht dargestellte Schlittenführung eines ebenfalls von der Steuereinheit 16 über eine Datenübertragungsstrecke 24.1 gesteuerten Linearantrieb 24, der mit Trägern 25 am Maschinengestell gehalten und in gleicher Weise wie der Linearantrieb 18 ausgebildet ist, d.h. beispielsweise wiederum aus einer Vielzahl von in Transportrichtung B aufeinander folgenden Magnetpolen und diesen zugeordneten, individuell ansteuerbaren Magnetwicklungen besteht. Jeder Schlitten 23 ist wiederum mit wenigstens einem mit den Magnetpolen des Linearantriebes 24 zusammenwirkenden Permanentmagneten versehen.

An einer Längsseite des Schlittens 23 ist ein L-förmiger Tragfuß 26 befestigt, und zwar bei der dargestellten Ausführungsform im Bereich des oberen Endes des längeren, sich in vertikaler Richtung erstreckenden Schenkels 26.1 des Tragfußes 26. Der kürzere, horizontale Schenkel 26.2 ist an seiner Oberseite mit einem Drehteller 27 versehen, der bei der dargestellten Ausführungsform um eine vertikale Achse VA frei drehbar ist und eine Standfläche für den Boden 2.1 des jeweiligen in der Behälteraufnahme 8 aufgenommenen und mit seiner Achse achsgleich mit der Achse VA angeordneten Behälters 2 bildet.

Mit Abstand oberhalb des Drehtellers 27 ist an einem Ausleger 28 ein Hub- und Drehantrieb 29 vorgesehen, der über eine einen bidirektionalen Transfer von Daten und/oder Befehlen ermöglichende Datenübertragungsstrecke 30 mit der Steuereinheit 16 verbunden ist. Antriebsmäßig ist der Hub- und Drehantrieb 29 mit einer Welle 29.1 verbunden, die achsgleich mit der Achse VA angeordnet an ihrem unteren Ende eine Zentrierglocke 31 trägt, sodass die Zentrierglocke 31 über den von der Steuereinheit 16 gesteuerten Hub- und Drehantrieb 29 um einen vorgegebenen Hub in Achsrichtung der Achse VA angehoben und abgesenkt (Doppelpfeil C der Figur 2) sowie auch gesteuert um die Achse VA geschwenkt werden kann (Doppelpfeil D der Figuren 2 und 3).

Die Arbeitsweise der Vorrichtung 1 lässt sich, wie folgt, beschreiben:
An einem in der Figur 1 allgemein mit 32 bezeichneten Behältereinlauf werden die beispielsweise gefüllten und verschlossenen Behälter 2 von einem nicht dargestellten äußeren Transporteur jeweils einzeln an eine sich an dem Behältereinlauf 32 vorbei bewegende Behälteraufnahme 8 übergehen, und zwar bei zunächst angehobener Zentrierglocke 31, sodass jeder Behälter 2 mit seinem Behälterboden- 2.1 auf dem Drehteller 27 der betreffenden Behälteraufnahme 8 aufsteht. Im Anschluss daran wird gesteuert durch die Steuereinheit 16 und angetrieben durch den Hub- und Drehantrieb 29 die Zentrierglocke 31 abgesenkt, sodass der jeweilige Behälter 2 im Bereich seiner Behältermündung bzw. im Bereich des dortigen Behälterverschlusses 2.2 in der Zentrierglocke 31 aufgenommen und so zwischen dieser und dem Drehteller 27 gehalten ist.

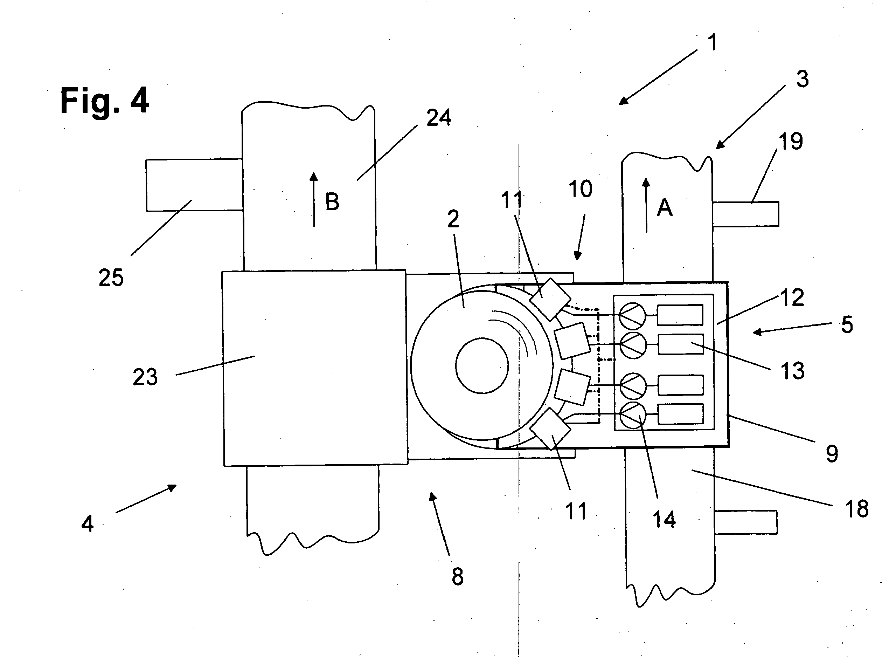

Die beiden Transportsysteme 3 und 4 bzw. deren Linearantriebe 18 und 24 werden so gesteuert, dass immer dann, wenn eine Behälteraufnahme 8 mit einem Behälter 2 den Druckstreckeneinlauf 7.1 erreicht hat, sich dort auch ein Druckkopf 5 befindet, der beispielsweise aus dem Abschnitt 6.1 bzw. aus der dortigen Wartestellung beschleunigt an den Druckstreckeneinlauf 7.1 bewegt wurde. Ausgehend von dem Druckstreckeneinlauf 7.1 werden dann die mit einem Behälter 2 versehene Behälteraufnahme 8 und die dieser Behälteraufnahme zugeordnete Druckkopfeinheit 5 synchron, d.h. mit derselben Geschwindigkeit und in derselben Transportrichtung A bzw. B durch die Druckstrecke 7 bewegt. Hierbei sind die Druckköpfe 11 des Druckwerkes 10 der jeweiligen Druckkopfeinheit 5 in der in der Figur 4 dargestellten Weise der zu bedruckenden Mantelfläche des jeweiligen Behälters 2 benachbart angeordnet, und zwar in gleichmäßigen Winkelabständen um einen Teilbereich der zu bedruckenden kreiszylinderförmigen Mantelfläche des Behälters 2 verteilt.

Durch Ansteuerung der Druckköpfe 11 durch die Elektronik 15 bzw. durch das in dieser Elektronik abgelegte Druckbild erfolgt das mehrfarbige Bedrucken des Behälters 2, wobei die Druckköpfe 11 die Druckfarbe jeweils in vertikalen Zeilen aufbringen und das flächige Druckbild DB hierbei durch gesteuertes Drehen (Doppelpfeil D) des Behälters um seine vertikale Behälterachse bzw. um die Achse VA durch den von der Steuereinheit 16 angesteuerten Hoch- und Drehantrieb 29 erfolgt. Grundsätzlich besteht hierbei die Möglichkeit, den Mehrfarbendruck bzw. das Druckbild DB in einem einzigen Druckvorgang aufzubringen, in dem der Behälter 2 um seine vertikale Behälterachse nur einmal aus einer Ausgangslage in eine dem vollständigen Druckbild DB entsprechende Endlage geschwenkt wird, oder aber der Druckvorgang erfolgt in mehreren Arbeitsschritten, wobei in jedem Arbeitsschritt unter Schwenken (Doppelpfeil D) des Behälters 2 aus der Ausgangslage in die Endlage jeweils ein Farbsatz FS des Mehrfarbendrucks bzw. des Druckbildes DB oder aber ein kombinierter Farbsatz aus wenigstens zwei Farben erzeugt wird.

Sobald das vollständige Druckbild DB auf dem betreffenden Behälter 2 aufgebracht ist, spätestens aber dann, wenn die betreffende Behälteraufnahme 8 den Druckstreckenauslauf 7.2 erreicht hat, wird die jeweilige Druckkopfeinheit 5 unabhängig von der Bewegung der Behälteraufnahme 8 über den Abschnitt 6.3 und den Abschnitt 6.1 in die Wartestellung bewegt. Die Behälteraufnahme 8 mit dem bedruckten Behälter 2 wird dann beispielsweise beschleunigt zunächst an den Behälterauslauf 33 bewegt, an dem der bedruckte Behälter 2 nach dem Anheben der Zentriertulpe 31 von der Behälteraufnahme 8 abgenommen und an einen nicht dargestellten äußeren Transporteur weitergeleitet wird. Die dann leere Behälteraufnahme 8 gelangt z.B. an eine Warteposition des Transportsystems 4, aus der die Behälteraufnahmen 8 dann wieder mit dem Transportsystem 4 bzw. mit dem Linearförderer 24 an den Behältereinlauf 32 zur Aufnahme eines weiteren, zu bedruckenden Behälters bewegt werden.

Vorstehend wurde davon ausgegangen, dass die synchrone Bewegung der Druckkopfeinheiten 5 und der diesen jeweils zugeordneten Behälteraufnahmen 8 entlang der Druckstrecke 7 allein durch entsprechende Ansteuerung der Linearantriebe 17 und 18 erfolgt. Grundsätzlich besteht auch die Möglichkeit, dass immer dann, wenn am Druckstreckeneinlauf 7.1 eine Druckkopfeinheit 5 einer Behälteraufnahme 8 zugeordnet ist, zwischen der Druckkopfeinheit 5 und dieser zugeordneten Behälteraufnahme 8 eine Kopplung oder Verbindung erzeugt wird, die zusätzlich zu dem synchronen Antrieb durch die Linearantriebe 18 und 24 eine exakte Positionierung der jeweiligen Druckkopfeinheit 5 zu der zugehörigen Behälteraufnahme 8 gewährleistet. Diese Kopplung kann beispielsweise durch mechanische Mittel und/oder magnetisch erfolgen. Hierbei ist es dann insbesondere auch möglich, dass die Bewegung der jeweiligen Druckkopfeinheit 5 und der zugehörigen Behälteraufnahme 8 entlang der Druckstrecke 7 lediglich durch einen Linearantrieb 18 oder 24 erfolgt, also z.B. lediglich die jeweilige Druckkopfeinheit 5 durch ihren Linearantrieb 18 bewegt und zugehörige Behälteraufnahmen 8 mitgeführt wird oder aber umgekehrt lediglich die jeweilige Behälteraufnahme 8 durch ihren Linearantrieb 24 bewegt und die zugeordnete Druckkopfeinheit 5 über die mechanische Verbindung mitgeführt wird.

Zumindest die Datenübertragungsstrecken 17 und 30 sind bevorzugt für eine drahtlose, bidirektionale Daten- und/oder Befehlsübertragung ausgebildet. Zur Bestimmung der Position der jeweiligen Druckkopfeinheit 5 oder der jeweiligen Behälteraufnahme 8 sind an den Schlitten 9 bzw. 23 Geberelemente, beispielsweise in Form von Permanentmagneten vorgesehen, die mit auf das Magnetfeld dieser Magneten ansprechenden Sensorelemente zusammenwirken, welche zumindest an kritischen Bereichen der jeweiligen Bewegungsbahn, beispielsweise am Druckstreckeneinlauf 7.1 und/oder am Druckstreckenauslass 7.2 und/oder an den Füll- oder Tankstationen 21 und/oder an dem die Wartestellung oder -position bildenden Teilen des Bewegungsbahn 6 und/oder am Behältereinlauf 32 und/oder am Behälterauslauf 33 vorgesehen sind.

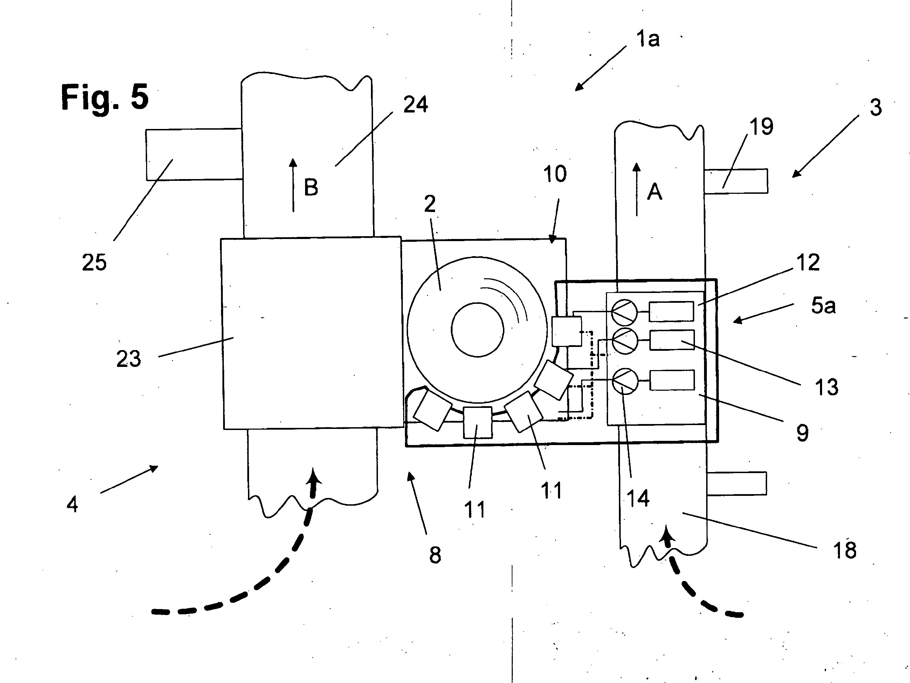

Während bei der in den Figuren 1 - 4 dargestellte Ausführungsform das jeweilige Druckwerk 10 so ausgebildet ist, dass sich die Druckköpfe 11 in einer kreisbogenförmigen Anordnung an einer sich in Transportrichtung A erstreckenden Seite des jeweiligen Schlittens 9 befinden und damit auf der Druckstrecke 7 an der der dortigen Transportstrecke 4 zugewandten Seite (Figur 4) zeigt die Figur 5 in einer der Figur 4 entsprechenden Darstellung, d.h. in Draufsicht eine Vorrichtung 1a mit Druckkopfeinheiten 5a, bei denen die das jeweilige Druckwerk 10 bildenden Druckköpfe 11 an einem kreisbogenförmigen Randbereich des Schlittens 9a vorgesehen sind, der (Randbereich) zumindest auf einer Teillänge senkrecht oder quer zur Transportrichtung A der Druckkopfeinheiten 5a orientiert ist.

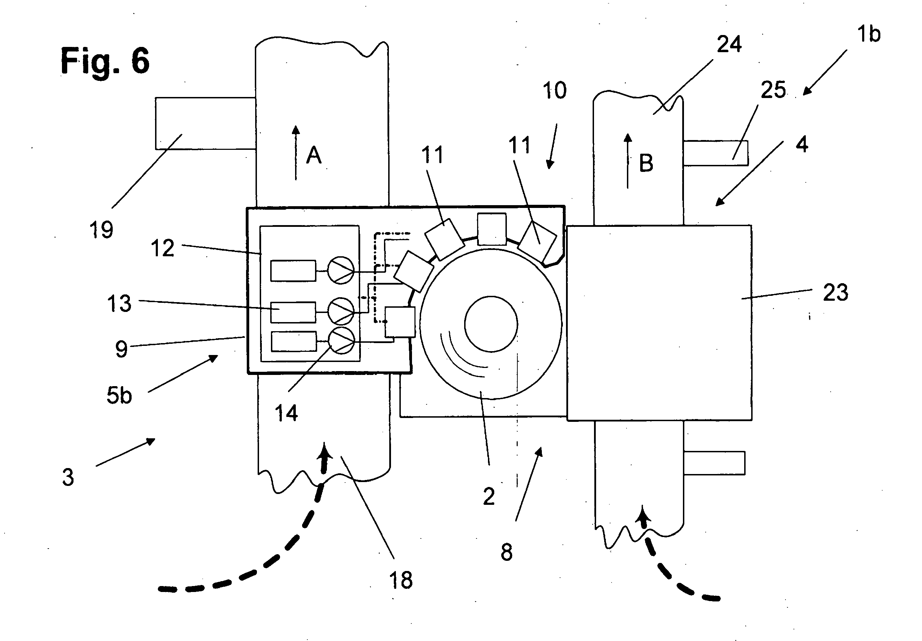

Die Figur 6 zeigt in einer Darstellung wie Figur 5 als weitere Ausführungsform eine Druckkopfeinheit 5b einer Vorrichtung 1 b, die sich von der Vorrichtung 1 dadurch unterscheidet, dass bei den Druckkopfeinheiten 5b die einzelnen Druckköpfe 11 wiederum an einem kreisbogenförmigen Randbereich des jeweiligen Schlittens 9b vorgesehen sind, der (Randbereich) zumindest auf einer Teillänge senkrecht oder quer zur Transportrichtung A der Druckkopfeinheiten 5b orientiert ist, und zwar abweichend von den Druckkopfeinheiten 5a der Figur 5 derart, dass die Druckköpfe 11 dem zugehörigen Behälter 2 bezogen auf die Transportrichtung A bzw. B vorauseilen.

Bei den Ausführungsformen der Figuren 5 und 6 erfolgt die Bewegung der Druckkopfeinheiten 5a bzw. 5b und der diesen jeweils zugeordneten Behälteraufnahmen 8 entlang der Druckstrecke 7 in der Weise, dass die am Druckstreckeneinlauf 7.1 (Einschwenkbereich) befindliche Behälteraufnahme 8 von einer Druckkopfeinheit 5a bzw. die am Druckstreckeneinlauf 7.1 befindliche Druckkopfeinheit 5b von einer Behälteraufnahme 8 mechanisch erfasst und dann entlang der Druckstrecke 7 mitgeführt wird. Der Linearantrieb 24 ist dabei entlang der Druckstrecke 7 beispielsweise nicht oder allenfalls unterstützend wirksam. Selbstverständlich besteht auch bei diesen Ausführungsformen die Möglichkeit beide Linearantriebe 18 und 24 in ihrem der Druckstrecke 7 zugeordneten Abschnitt durch die Steuereinheit 16 so zu steuern, dass sich allein durch diese Steuerung die synchrone Bewegung zwischen jeder Behälteraufnahme 8 und der zugeordneten Druckkopfeinheit 5a entlang der Druckstrecke 7 ergibt.

Die Erfindung wurde voranstehend an Ausführungsbeispielen beschrieben. Es versteht sich, dass Änderungen sowie Abwandlungen möglich sind, ohne dass dadurch der der Erfindung zugrundeliegende Erfindungsgedanke verlassen wird. So wurde vorstehend davon ausgegangen, dass die Druckstrecke 7 von zwei parallel zueinander verlaufenden geradlinigen Abschnitten der beiden Transportsysteme 3 und 4 gebildet ist. Es versteht sich, dass diese Abschnitte der Transportsysteme 3 und 4 für die Druckkopfeinheiten 5, 5a bzw. 5b und die Behälteraufnahmen 8 auch einen anderen Verlauf, beispielsweise einen gekrümmten Verlauf aufweisen können Grundsätzlich besteht auch die Möglichkeit, die Transportsysteme für die Druckkopfeinheiten und die Behälteraufnahmen so auszubilden, dass sich diese Elemente entlang der Druckstrecke 7 nicht auf zwei getrennten, in horizontaler und/oder vertikaler Richtung gegeneinander versetzten Bewegungsbahnen bewegen, sondern auf einer gemeinsamen Bewegungsbahn etwa in der Weise, dass sich hinter jede Behälteraufnahme 8, die den Druckstreckeneinlauf 7.1 erreicht hat, eine Druckkopfeinheit 5, 5a bzw. 5b oder umgekehrt hinter jede Druckkopfeinheit 5, 5a bzw. 5b, die den Druckstreckeneinlauf 7.1 erreicht hat, eine Behälteraufnahme 8 einordnet, wobei die jeweils einander zugeordneten Druckkopfeinheiten 5, 5a bzw. 5b und Behälteraufnahmen 8 während der Bewegung entlang der Druckstrecke 7 miteinander verbunden sind, sodass dann beispielsweise die Druckkopfeinheiten 5, 5a bzw. 5b die entlang der Druckstrecke 7 nicht angetriebenen Behälteraufnahmen 8 oder aber umgekehrt die Behälteraufnahmen 8 die entlang der Druckstrecke 7 nicht angetriebenen Druckkopfeinheiten 5, 5a bzw. 5b schieben oder ziehen.

Die antriebsmäßige Verbindung zwischen den Druckkopfeinheiten und Behälteraufnahmen kann wiederum auf unterschiedlichste Weise, beispielsweise durch mechanische Koppelelemente, durch magnetische Kopplung usw. erfolgen.

Vorstehend wurde davon ausgegangen, dass die beiden Transportsysteme 3 und 4 für die Bewegung der Druckkopfeinheiten 5, 5a bzw. 5b oder der Behälteraufnahmen 8 jeweils einen unmittelbar auf die Schlitten 9, 9a, 9b bzw. 23 einwirkenden elektrischen Linearantrieb aufweisen. Selbstverständlich sind auch andere Antriebe möglich, beispielsweise Förderbänder oder Förderriemen aufweisende Antriebe, in jedem Fall aber bevorzugt solche, die auf unterschiedlichen Abschnitten der Transportstrecken oder Bewegungsbahnen unterschiedliche Bewegungszustände für die Druckkopfeinheiten 5, 5a bzw. 5b und/oder Behälteraufnahmen 8 ermöglichen, auf der Druckstrecke 7 aber eine synchrone Bewegung zwischen den Behälteraufnahmen 8 und den diesen zugeordneten Druckkopfeinheiten 5, 5a bzw. 5b sicherstellen. Weiterhin besteht die Möglichkeit, nur ein Transportsystem, beispielsweise das Transportsystem 3 für die Druckkopfeinheiten 5, 5a bzw. 5b oder das Transportsystem 4 für die Behälteraufnahmen 8 als derart flexibles Transportsystem und das andere Transportsystem für die Behälteraufnahmen 8 oder Druckkopfeinheiten 5, 5a bzw. 5b als starres Transportsystem auszugestalten.

### Bezugszeichenliste

- 1, 1a, 1b: Vorrichtung zum Bedrucken von Behältern
- 2: Behälter
- 2.1: Behälterboden
- 2.2: Behälterverschluss
- 3, 4: Transportsystem
- 5, 5a, 5b: Druckkopfeinheit
- 6: Bewegungsbahn
- 6.1 - 6.4: Abschnitte der Bewegungsbahn 6
- 7: Druckstrecke
- 7.1: Druckstreckeneinlauf (Einschwenkbereich)
- 7.2: Druckstreckenauslauf
- 8: Behälteraufnahme
- 9, 9a, 9b: Schlitten
- 10: Druckwerk
- 11: Druckkopf
- 12: Versorgungs- und Steuereinheit
- 13: Hilfstank
- 14: Pumpe
- 15: Elektronik
- 16: zentrale Steuereinheit
- 17: Datenübertragungsstrecke
- 18: Linearantrieb
- 19: Träger
- 20: Datenübertragungsstrecke
- 21: Tankstation
- 22: Datenübertragungsstrecke
- 23: Schlitten
- 24: Linearantrieb
- 24.1: Datenübertragungsstrecke
- 25: Träger
- 26: Tragfuß
- 26.1,26.2: Schenkel
- 27: Drehteller
- 28: Ausleger
- 29: Hub- und Drehantrieb
- 29.1: Welle des Hub- und Drehantriebs
- 30: Datenübertragungsstrecke
- 31: Zentüerglocke
- 32: Behältereinlauf
- 33: Behälterauslauf
- A, B: Transportrichtung
- C: Hub der Zentrierglocke 31
- D: Schwenk- oder Drehbewegung der Zentrierglocke 31
- VA: Achse

## Patentansprüche

1. Vorrichtung zum Bedrucken, insbesondere zum mehrfarbigen Bedrucken von Behältern (2) an wenigstens einer Behälteraußenfläche mit einem von wenigstens einem Druckbild (DB) gebildeten Aufdruck, mit einer Vielzahl von Druckkopfeinheiten (5, 5a, 5b), die jeweils wenigstens ein Druckwerk (10), vorzugsweise jeweils wenigstens ein Druckwerk (10) mit wenigstens zwei Druckköpfen (11) zur Erzeugung des jeweiligen Druckbildes (DB) aufweisen und mit wenigstens einem ersten Transportsystem (3) auf einer in sich geschlossenen Bewegungsbahn (6) in einer ersten Transportrichtung (A) bewegbar sind, mit einer Vielzahl von Behälteraufnahmen (8), die mittels wenigstens eines zweiten Transportsystems (4) auf einer in sich geschlossenen Bewegungsbahn zwischen einer Behälteraufgabe (32) zur Aufnahme jeweils eines zu bedruckenden Behälters (2) und einer Behälterabgabe (33) zur Abgabe des jeweils bedruckten Behälters (2) in einer zweiten Transportrichtung (B) bewegbar sind, wobei das wenigstens eine erste und das wenigstens eine zweite Transportsystem (3, 4) zwischen der Behälteraufgabe (32) und der Behälterabgabe (33) eine Druckstrecke (7) mit elnem Drückstreckeneinlauf (7.1) und einem Druckstreckenauslauf (7.2) bilden, auf der das Bedrucken jedes in einer Behälteraufnahme (8) aufgenommenen Behälters (2) durch eine dieser Behälteraufnahme (8) zugeordnete Druckkopfeinheit (5, 5a, 5b) bzw. deren Druckwerk (10) erfolgt und wobei das erste Transportsystem (3) für ein synchrones Mitführen der Druckkopfeinheiten (5, 5a, 5b) mit der jeweils zugeordneten Behälteraufnahme (8) des zweiten Transportsystems (4) entlang der Druckstrecke (7) ausgebildet ist,
**dadurch gekennzeichnet,**
**dass** wenigstens eines der Transportsysteme (3, 4) für eine gesteuerte Bewegung der Druckkopfeinheiten (5, 5a) und/oder der Beheiteraufnahmen (8) entlang seiner Bewegungsbahn (6) derart ausgebildet Ist, dass durch eine bezogen auf die jeweilige Heuptbewegungsrichtung hinsichtlich Bewegungsart und/oder -geschwindigkeit von anderen Druckkopfeinheiten (5, 5a) und/oder Behälteraufnahmen (8) des selben Transportsystems (3, 4) unabhängige Bewegung die Druckkopfeinheiten (5, 5a) und/oder die Behälteraufnahmen (8) beschleunigt von dem Druckstreckenauslauf (7.2) zum Druckstreckeneinlauf (7.1) zurückbewegt werden.

2. Vorrichtung nach Anspruch 1, **dadurch gekennzeichnet, dass** das erste Transportsystem (3) eine Vielzahl von individuell bewegbaren Schlitten (9, 9a, 9b) aufweist, die jeweils eine Druckkopfeinheit (5, 5a, 5b) mit dem Druckwerk (10) bilden.

3. Vorrichtung nach Anspruch 1 oder 2, **dadurch gekennzeichnet, dass** die Druckkopfeinheiten (5, 5a, 5b) jeweils eine Versorgungs- und Steuereinheit (12) zum Versorgen der Druckköpfe (11) mit Druckfarbe oder -tinte sowie zur Ansteuerung der vorzugsweise nach dem Tintenstrahldruckkopfprinzip arbeitenden Druckköpfe (11) aufweist, wobei die Elektronik (15) der Versorgungs- und Steuereinheit (12) bevorzugt für eine elektronische Speicherung wenigstens einer dem Druckbildes (DB) entsprechenden Druckvorlage oder -maske ausgebildet ist.

4. Vorrichtung nach einem der vorhergehenden Ansprüche, **dadurch gekennzeichnet, dass** das zweite Transportsystem (4) eine Vielzahl von zweiten Schlitten (23) aufweist, die Bestandteil jeweils einer Behälteraufnahme (8) sind.

5. Vorrichtung nach einem der vorhergehenden Ansprüche, **dadurch gekennzeichnet, dass** die Behalteraufnahmen (8) mit Mitteln zum Einspannen oder Halten der Behälter (2) und/oder zum gesteuerten Drehen oder Schwenken der Behälter (2) zumindest während des Bedruckens ausgebildet sind.

6. Vorrichtung nach einem der vorhergehenden Ansprüche, **dadurch gekennzeichnet, dass** das wenigstens eine erste und/oder zweite Transportsystem (3, 4) einen Linearantrieb (18, 24) zum Bewegen der Druckkopfeinheiten (5, 5a, 5b) und/oder Behälteraufnahme (8) oder deren Schlitten (9, 9a, 9b, 23) aufweist, vorzugsweise einen elektrischen, nach Art eines Linearmotorsystems ausgebildeten Linearantrieb oder einen mechanische Förderelemente, wie beispielsweise Förderbänder oder Förderriemen aufweisenden Linearantrieb.

7. Vorrichtung nach einem der vorhergehenden Ansprüche, **dadurch gekennzeichnet, dass** die Druckkopfeinheiten (5, 5a, 5b) oder deren Schlitten (9, 9a, 9b) sowie die Behälteraufnahme (8) oder deren Schlitten (23) für eine antriebsmäßige Kopplung der Behälteraufnahmen (8) mit den zugeordneten Druckkopfeinheiten (5, 5a, 5b) auf der Druckstrecke (7) ausgebildet sind, beispielsweise durch mechanische und/oder magnetische Kopplungselemente, und/oder beispielsweise in der Form, dass die Behälteraufnahme (8) von der jeweils zugeordneten Druckkopfeinheit (5, 5a, 5b) oder aber die jeweilige Druckkopfeinheit (5, 5a, 5b) von der jeweils zugeordneten Behälteraufnahme (8) durch Ziehen oder Schieben entlang der Druokstreoke (7) bewegt wird.

8. Vorrichtung nach einem der vorhergehenden Ansprüche, **dadurch gekennzeichnet, dass** das wenigstens eine erste Transportsystem (3) an der Druckstrecke (7) einen gegenüber einem dortigen Bewegungsbahnabschnitt der zweiten Transportstrecke (4) versetzten Bewegungsbahnabschnitt (6.2) bildet.

9. Vorrichtung nach einem der vorhergehenden Ansprüche, **dadurch gekennzeichnet, dass** die wenigstens eine erste und die wenigstens eine zweite Transportstrecke (3, 4) an der Druckstrecke (7) eine gemeinsamen Bewegungabahnabschnitt für die Druckkopfeinheit (5, 5a, 5b) und die Behälteraufnahmen (8) bilden.

10. Vorrichtung nach einem der vorhergehenden Ansprüche, **dadurch gekennzeichnet, dass** an dem wenigstens einen ersten Transportsystem (3) oder an der dortigen Bewegungsbahn (6) der Druckkopfeinheiten (5, 5a) wenigstens eine Füll- oder Tankstation (21) zum Nachfüllen der Druckkopfeinheiten (5, 5a) mit Druckfarbe vorgesehen ist.

11. Verfahren zum Bedrucken, insbesondere zum mehrfarbigen Bedrucken von Behältern (2) an wenigstens einer Behälteraußenfläche mit einem von wenigstens einem Druckbild (DB) gebildeten Aufdruck unter Verwendung von mit einem ersten Transportsystem (3) auf einer in sich geschlossenen Bewegungsbahn (6) in einer ersten Transportrichtung (A) bewegten Druckkopfeinheiten (5, 5a, 6b) mit jeweils wenigstens einem Druckwerk (10) zur Erzeugung des jeweiligen Druckbildes sowie unter Verwendung von mit einem zweiten Transportsystem (4) bewegten Behälteraufnahmen (8), wobei während des Bedruckens jeweils eine Druckkopfeinheit (5, 5a, 5b) synchron mit einer einen zu bedruckenden Behälter (2) aufweisenden Bshälteraufnahme (8) entlang der zwischen einem Druckstreckeneinlauf (7.1) und einem Druckstreckenauslauf (7.2) gebildeten Druckstrecke (7) bewegt wird,
**dadurch gekennzeichnet,**
**dass** die Druckkopfeinheit (5, 5a, 5b) und/oder die Behälteraufnahme (8) jeweils in einer von der Bewegung anderer Druckkopfeinheiten (5, 5a, 5b) oder anderer Behälteraufnahmen (8) des selben Transportsystems (3, 4) unabhängigen, beschleunigten Bewegung von dem Druckstreckenauslauf (7.2) an den Druckstreckeneinlauf (7.1) zurückbewegt werden.

## Claims

1. Device for printing, in particular for the multicoloured printing of containers (2), on at least one container outer surface, with an imprint formed from at least one print image (DB), with a plurality of printing head units (5, 5a, 5b), which in each case comprise at least one printing unit (10), preferably in each at least one printing unit (10) with at least two printing heads (11) for producing the respective print image (DB), and which can be moved by at least one first transport system (3) on a closed movement path (6) in a first transport direction (A), with a plurality of container mounts (8), which can be moved by means of at least one second transport system (4) on a closed movement path between a container inlet (32), for accommodating in each case a container (2) which is to be printed, and a container discharge (33) for the discharge of the container (2) which has been printed, in a second transport direction (B), wherein the at least one first transport system and the at least one second transport system (3, 4) form, between the container inlet (32) and the container discharge (33), a printing line (7) with a printing line inlet (7.1) and a printing line discharge (7.2), on which the printing takes place of each container (2) located in a container mount (6) by a printing head unit (5, 5a, 5b) or its printing unit (10), allocated to this container mount (8), and wherein the first transport system (3) is arranged for a synchronous carrying jointly of the printing head units (5, 5a, 5b) with the container mount (8) allocated in each case of the second transport system (4), along the printing line (7), **characterised in that**
at least one of the transport systems (3, 4) is arranged for a controlled movement of the printing head units (5, 5a) and/or of the container mounts (8) along its movement path (6) in such a way that, by means of a movement which is independent in relation to the respective main movement direction with regard to the type and/or speed of movement of other printing head units (5, 5a) and/or container mounts (8) of the same transport system (3, 4), the printing head units (5, 5a) and/or the container mounts (8) are moved back from the printing line discharge (7.2) to the printing line inlet (7.1) in an accelerated manner.

2. Device according to claim 1, **characterised in that** the first transport system (3) comprises a plurality of individually movable carriages (9, 9a, 9b), which in each case form a printing head unit (5, 5a, 5b) with the printing unit (10).

3. Device according to claim 1 or 2, **characterised in that** the printing head units (5, 5a, 5b) in each case comprise a supply and control unit (12) for supplying the printing heads (11) with printing ink or colour, as well as for actuating the printing heads (11) which operate in accordance with the ink-jet printing head principle, wherein the electronics unit (15) of the supply and control unit (12) is arranged preferably for an electronic storage of at least one printing copy element or mask corresponding to the printing image (DB).

4. Device according to any one of the preceding claims, **characterised in that** the second transport system (4) comprises a plurality of second carriages (23), which are constituent parts in each case of a container mount (6).

5. Device according to any one of the preceding claims, **characterised in that** the container mounts (8) are formed with means for the clamping or holding of the containers (2) and/or for the controlled rotation or pivoting of the containers (2) at least during the printing.

6. Device according to any one of the preceding claims, **characterised in that** the at least one first and/or second transport system (3, 4) comprises a linear drive (16, 24) for moving the printing head units (5, 5a, 5b) and/or container mounts (8) or their carriages (9, 9a, 9b, 23), preferably an electrical linear drive arranged in the form of a linear motor system, or a linear drive comprising mechanical conveying elements, such as, for example, conveying bands or conveying belts.

7. Device according to any one of the preceding claims, **characterised in that** the printing head units (5, 5a, 5b) or their carriages (9, 9a, 9b) and the container mounts (8) or their carriages (23) are arranged for a drive-like coupling of the container mounts (8) with the printing head units (5, 5a, 5b) allocated to them, on the printing line (7), for example by mechanical and/or magnetic coupling elements, and/or for example in the form that the container mounts (8) are moved by the printing head unit (5, 5a, 5b) allocated in each case, or the respective printing head unit (5, 5a, 5b) is moved by the container mount (8) allocated in each case, by pulling or pushing along the printing line (7).

8. Device according to any one of the preceding claims, **characterised in that** the at least one first transport system (3) forms at the printing line (7) a movement path section (6.2) which is offset in relation to a movement path section of the second transport line (4) located at that point.

9. Device according to any one of the preceding claims, **characterised in that** the at least one first and the at least one second transport line (3, 4) form at the printing line (7) a common movement path section for the printing head unit (5, 5a, 5b) and the container mounts (8).

10. Device according to any one of the preceding claims, **characterised in that** provided at the at least one first transport system (3), or at the movement path (6) of the printing head units (5, 5a) at that point, is at least one filling station or tank station (21) for refilling the printing head units (5, 5a) with printing ink.

11. Method for printing, in particular multicoloured printing, of containers (2) on at least one container outer surface with an imprint formed by at least one printing image (DB), making use of printing head units (5, 5a, 5b) with a first transport system (3) on an enclosed movement path (6) in a first transport direction (A), moved with in each case at least one printing unit (10) for producing the respective printing image, as well as with the use of container mounts (8) moved by a second transport system (4), wherein, during the printing, in each case a printing head unit (5, 5a, 5b) is moved in synchrony with a container mount (8), holding a container (2) which is to be printed, along the printing line (7) formed between a printing line inlet (7.1) and a printing line discharge (7.2),
**characterised in that**
the printing head unit (5, 5a, 5b) and/or the container mounts (8) are in each case moved back in an accelerated movement, independent of the movement of other printing head units (5, 5a, 5b) or other container mounts (8) of the same transport system (3, 4), from the printing line discharge (7.2) to the printing line inlet (7.1).

## Revendications

1. Dispositif d'impression, en particulier d'impression polychrome de récipients (2) sur au moins une surface extérieure de récipient avec une impression formée d'au moins une image d'impression (DB), avec une pluralité d'unités de tête d'impression (5, 5a, 5b) qui présentent respectivement au moins un groupe d'impression (10), de préférence respectivement au moins un groupe d'impression (10) avec au moins deux têtes d'impression (11) pour la génération de l'image d'impression respective (DB) et sont mobiles avec au moins un premier système de transport (3) sur une voie de déplacement (6) fermée en soi dans un premier sens de transport (A), avec une pluralité de logements de récipient (8) qui sont mobiles à l'aide d'au moins un second système de transport (4) sur une voie de déplacement fermée en soi entre une alimentation de récipient (32) pour la réception respectivement d'un récipient (2) à imprimer et d'une sortie de récipient (33) pour la sortie du récipient (2) respectivement imprimé dans un second sens de transport (B), l'au moins un premier et l'au moins un second système de transport (3, 4) formant entre l'alimentation de récipient (32) et la sortie de récipient (33) une trajectoire d'impression (7) avec une entrée de trajectoire d'impression (7.1) et une sortie de trajectoire d'impression (7.2), sur laquelle l'impression de chaque récipient (2) reçu dans un logement de récipient (8) est effectuée par une unité de tête d'impression (5, 5a, 5b) associée à ce logement de récipient (8) ou son groupe d'impression (10) et le premier système de transport (3) étant réalisé pour un entraînement synchrone des unités de tête d'impression (5, 5a, 5b) avec le logement de récipient (8) respectivement associé du second système de transport (4) le long de la trajectoire d'impression (7),
**caractérisé en ce**
**qu'**au moins un des systèmes de transport (3, 4) est réalisé pour un mouvement commandé des unités de tête d'impression (5, 5a) et/ou des logements de récipient (8) le long de sa voie de déplacement (6) de telle manière que, par un mouvement indépendant des autres unités de tête d'impression (5, 5a) et/ou logements de récipients (8) du même système de transport (3, 4) par rapport au sens de déplacement principal respectif en ce qui concerne le type et/ou la vitesse de déplacement, les unités de tête d'impression (5, 5a) et/ou les logements de récipients (8) sont redéplacés par accélération de la sortie de trajectoire d'impression (7.2) à l'entrée de trajectoire d'impression (7.1).

2. Dispositif selon la revendication 1, **caractérisé en ce que** le premier système de transport (3) présente une pluralité de chariots (9, 9a, 9b) mobiles individuellement qui forment respectivement une unité de tête d'impression (5, 5a, 5b) avec le groupe d'impression (10).

3. Dispositif selon la revendication 1 ou 2, **caractérisé en ce que** les unités de tête d'impression (5, 5a, 5b) présentent respectivement une unité d'alimentation et de commande (12) pour l'alimentation en couleur ou encre d'impression des têtes d'impression (11) ainsi que pour la commande des têtes d'impression (11) travaillant de préférence selon le principe de la tête d'impression à jet d'encre, l'électronique (15) de l'unité d'alimentation et de commande (12) étant réalisée de préférence pour un enregistrement électronique au moins d'un modèle ou masque d'impression correspondant à l'image d'impression (DB).

4. Dispositif selon l'une quelconque des revendications précédentes, **caractérisé en ce que** le second système de transport (4) présente une pluralité de seconds chariots (23) qui font respectivement partie d'un logement de récipient (8).

5. Dispositif selon l'une quelconque des revendications précédentes, **caractérisé en ce que** les logements de récipient (8) sont réalisés avec des moyens pour le serrage ou le maintien des récipients (2) et/ou pour la rotation ou le pivotement commandé des récipients (2) au moins pendant l'impression.

6. Dispositif selon l'une quelconque des revendications précédentes, **caractérisé en ce que** l'au moins un premier et/ou second système de transport (3, 4) présente un entraînement linéaire (18, 24) pour le déplacement des unités de tête d'impression (5, 5a, 5b) et/ou du logement de récipient (8) ou de leurs chariots (9, 9a, 9b, 23), de préférence un entraînement linéaire électrique réalisé comme un système à moteur linéaire ou un entraînement linéaire présentant des éléments de transport mécaniques tels que par exemple des bandes de transport ou courroies de transport.

7. Dispositif selon l'une quelconque des revendications précédentes, **caractérisé en ce que** les unités de tête d'impression (5, 5a, 5b) ou leurs chariots (9, 9a, 9b) ainsi que le logement de récipient (8) ou son chariot (23) sont réalisés pour un couplage en entraînement des logements de récipient (8) avec les unités de tête d'impression (5, 5a, 5b) associées sur la trajectoire d'impression (7), par exemple par des éléments de couplage mécaniques et/ou magnétiques et/ou par exemple de telle manière que le logement de récipient (8) soit déplacé de l'unité de tête d'impression (5, 5a, 5b) associée respectivement ou l'unité de tête d'impression respective (5, 5a, 5b) soit déplacée du logement de récipient (8) associé respectivement par traction ou poussée le long de la trajectoire d'impression (7).

8. Dispositif selon l'une quelconque des revendications précédentes, **caractérisé en ce que** l'au moins un premier système de transport (3) forme sur la trajectoire d'impression (7) une section de bande de déplacement (6.2) décalée par rapport à une section de bande de déplacement qui s'y trouve de la seconde trajectoire de transport (4).

9. Dispositif selon l'une quelconque des revendications précédentes, **caractérisé en ce que** l'au moins une première et l'au moins une seconde trajectoire de transport (3, 4) sur la trajectoire d'impression (7) forment une section de bande de déplacement commune pour l'unité de tête d'impression (5, 5a, 5b) et les logements de récipient (8).

10. Dispositif selon l'une quelconque des revendications précédentes, **caractérisé en ce que** sur l'au moins un premier système de transport (3) ou sur la bande de déplacement qui s'y trouve (6) des unités de tête d'impression (5, 5a), au moins un poste de remplissage ou de ravitaillement (21) est prévu pour le rechargement en couleur d'impression des unités de tête d'impression (5,5a).

11. Procédé d'impression, en particulier d'impression polychrome de récipients (2) sur au moins une surface extérieure de récipient avec une impression formée d'au moins une image d'impression (DB) en utilisant des unités de tête d'impression (5, 5a, 5b) déplacées avec un premier système de transport (3) sur une bande de déplacement (6) fermée en soi dans un premier sens de transport (A) avec respectivement au moins un groupe d'impression (10) pour la génération de l'image d'impression respective ainsi qu'en utilisant des logements de récipient (8) déplacés avec un second système de transport (4), pendant l'impression respectivement une unité de tête d'impression (5, 5a, 5b) étant déplacée de manière synchrone avec un logement de récipient (8) présentant un récipient (2) à imprimer le long de la trajectoire d'impression (7) formée entre une entrée de trajectoire d'impression (7.1) et une sortie de trajectoire d'impression (7.2),
**caractérisé en ce**
**que** l'unité de tête d'impression (5, 5a, 5b) et/ou le logement de récipient (8) sont redéplacés respectivement dans un mouvement accéléré indépendant du mouvement des autres unités de tête d'impression (5, 5a, 5b) ou autres logements de récipient (8) du même système de transport (3, 4) de la sortie de trajectoire d'impression (7.2) à l'entrée de trajectoire d'impression (7.1).
